# EUROPEAN PATENT APPLICATION

(11) **EP 4 790 773 A1**
(43) Date of publication of application: **12.08.2026**
(21) Application number: 24874644.8
(22) Date of filing: 02.10.2024
(51) Int. Cl.: H01M 10/04, H01G 11/06, H01G 11/26, H01G 11/78, H01G 11/84, H01M 50/15, H01M 50/103, H01M 50/105

(54) **POWER STORAGE DEVICE, POWER STORAGE DEVICE MANUFACTURING KIT, AND METHOD FOR MANUFACTURING POWER STORAGE DEVICE**

(30) Priority: 02.10.2023 JP 2023171707; 06.10.2023 JP 2023174777
(71) Applicant: Dai Nippon Printing Co., Ltd., Tokyo 162-8001 (JP)
(72) Inventor: MIYASHIRO, Kae, Tokyo 162-8001 (JP); KANAZAWA, Sayako, Tokyo 162-8001 (JP); AKAHANE, Hiroyo, Tokyo 162-8001 (JP); SHIMADA, Shinya, Tokyo 162-8001 (JP); SASAKI, Miho, Tokyo 162-8001 (JP)
(74) Representative: Müller-Boré & Partner Patentanwälte PartG mbB
(86) International application number: PCT/JP2024/035283
(87) International publication number: WO 2025/075043

(57) **Abstract**

This power storage device includes an electrode body and an exterior body that seals the electrode body. The electrode body includes a first end portion, a second end portion disposed apart from the first end portion, and an intermediate portion continuously extending between the first end portion and the second end portion. The exterior body includes an exterior film wrapping the intermediate portion, and a lid body disposed on the first end portion side and/or the second end portion side, the lid body having a bonding surface that is bonded to the exterior film. The outer periphery of the intermediate portion is smaller than the outer periphery of the bonding surface.

## Description

### Technical Field

The present invention relates to an electrical storage device, an electrical storage device manufacturing kit, and a method for manufacturing an electrical storage device.

### Background Art

PTL 1 discloses an example of an electrical storage device. The electrical storage device includes an electrode assembly and an outer packaging that seals the electrode assembly. The outer packaging includes an outer package film that wraps the electrode assembly to form an opening part and a lid that is disposed at the opening part. The outer package film and the lid are joined.

### Citation List

### Patent Literature

PTL 1: Japanese Patent Laid-open Publication No. 2022-123686

### Summary of Invention

### Technical Problem

In the manufacturing of the electrical storage device, in order to wrap the electrode assembly, the wound state in which the outer package film is wound around the electrode assembly and the outer peripheral surface of the lid is achieved by a method such as winding the outer package film around the electrode assembly and the outer peripheral surface of the lid, and then the step of joining the outer package film to the outer peripheral surface of the lid may be performed. When there is a gap between the outer package film and the lid in the wound state of the outer package film, a joining failure occurs between the outer package film and the lid, and a restoration operation of a joining failure portion is required afterwards, which is not preferable. However, since the outer package film has elasticity, it is difficult to realize a state where the outer package film is wound around the outer peripheral surface of the lid so as not to be slack. However, when the tension applied to the outer package film is increased in the process of achieving the wound state such as winding around the lid, an unnecessary pressure is applied to the electrode assembly, which may cause an undesirable influence on the electrode assembly such as collapse of a laminated structure of an electrode foil and the like of the electrode assembly. Therefore, there has been a demand for a technique for suppressing a joining failure between the outer package film and the lid while eliminating the influence on the electrode assembly.

An object of the present invention is to provide an electrical storage device in which a joining failure between an outer package film and a lid is appropriately suppressed, an electrical storage device manufacturing kit, and a method for manufacturing an electrical storage device.

### Solution to Problem

An electrical storage device according to a first aspect of the present invention is an electrical storage device including: an electrode assembly and an outer packaging that seals the electrode assembly, in which the electrode assembly includes: a first end part; a second end part disposed away from the first end part; and an intermediate part continuously extending between the first end part and the second end part. The outer packaging includes an outer package film that wraps the intermediate part, and a lid that is disposed on at least one of the first end part side and the second end part side and has a joining surface joined to the outer package film. An outer periphery of the intermediate part is smaller than an outer periphery of the joining surface.

An electrical storage device according to a second aspect of the present invention is the electrical storage device according to the first aspect, in which a difference between the outer periphery of the intermediate part and the outer periphery of the joining surface is 1 mm or more.

An electrical storage device according to a third aspect of the present invention is the electrical storage device according to the first aspect or the second aspect, in which the intermediate part includes one or more corners formed with an R surface, and the joining surface includes one or more corners formed with an R surface. A radius of curvature of the one or more corners of the intermediate part is larger than a radius of curvature of the one or more corners of the joining surface.

An electrical storage device manufacturing kit according to a fourth aspect of the present invention is an electrical storage device manufacturing kit for manufacturing an electrical storage device including an electrode assembly and an outer packaging that seals the electrode assembly, in which the electrode assembly includes: a first end part; a second end part disposed away from the first end part; and an intermediate part continuously extending between the first end part and the second end part. The outer packaging includes: an outer package film for wrapping the intermediate part; and a lid that is to be disposed on at least one side of the first end part side and the second end part side and has a joining surface to be joined to the outer package film. An outer periphery of the intermediate part is smaller than an outer periphery of the joining surface.

An electrical storage device manufacturing kit according to a fifth aspect of the present invention is the electrical storage device manufacturing kit according to the fourth aspect, in which a difference between the outer periphery of the intermediate part and the outer periphery of the joining surface is 1 mm or more.

An electrical storage device manufacturing kit according to a sixth aspect of the present invention is the electrical storage device manufacturing kit according to the fourth aspect or the fifth aspect, in which the intermediate part includes one or more corners formed with an R surface, and the joining surface includes one or more corners formed with an R surface. A radius of curvature of the one or more corners of the intermediate part is larger than a radius of curvature of the one or more corners of the joining surface.

An electrical storage device intermediate according to a seventh aspect of the present invention is an electrical storage device intermediate for manufacturing an electrical storage device including an electrode assembly and an outer packaging that seals the electrode assembly, the electrode assembly including: a first end part; a second end part disposed away from the first end part; and an intermediate part continuously extending between the first end part and the second end part. The outer packaging includes: an outer package film that wraps the intermediate part; and a lid that is disposed on at least one of the first end part side and the second end part side and has a joining surface joined to the outer package film. The electrical storage device intermediate includes: the electrode assembly; and the outer package film and the lid that are joined to each other so as to house the electrode assembly, and an outer periphery of the intermediate part is smaller than an outer periphery of the joining surface. The electrical storage device intermediate does not contain an electrolytic solution.

A method for manufacturing an electrical storage device according to an eighth aspect of the present invention is a method for manufacturing an electrical storage device including an electrode assembly and an outer packaging that seals the electrode assembly, the electrode assembly including: a first end part; a second end part disposed away from the first end part; and an intermediate part continuously extending between the first end part and the second end part, and the outer packaging including: an outer package film; and a lid having a joining surface to be joined to the outer package film. The manufacturing method includes the following:
disposing the lid and the electrode assembly so that the lid is located on at least one of the first end part side and the second end part side; and
winding the outer package film around the lid and the electrode assembly so as to wrap the joining surface of the lid and the intermediate part of the electrode assembly; and joining the joining surface and the outer package film to form an electrical storage device intermediate in which the electrode assembly is housed in the lid and the outer package film and that does not contain an electrolytic solution.

Note that, in the electrical storage device intermediate, an outer periphery of the intermediate part is smaller than an outer periphery of the joining surface.

The method for manufacturing an electrical storage device according to a ninth aspect of the present invention is the method for manufacturing an electrical storage device according to the eighth aspect further including injecting the electrolytic solution into an inside of the lid and the outer package film joined to each other.

A method for manufacturing an electrical storage device according to a tenth aspect of the present invention is a method for manufacturing an electrical storage device including an electrode assembly and an outer packaging that seals the electrode assembly, the electrode assembly including: a first end part; a second end part disposed away from the first end part; and an intermediate part continuously extending between the first end part and the second end part, the outer packaging including: an outer package film; and a lid having a joining surface to be joined to the outer package film, and an outer periphery of the intermediate part being smaller than an outer periphery of the joining surface. The manufacturing method includes the following:
disposing the lid and the electrode assembly so that the lid is located on at least one of the first end part side and the second end part side; and
winding the outer package film around the lid and the electrode assembly so as to wrap the joining surface of the lid and the intermediate part of the electrode assembly; and
joining the joining surface and the outer package film.

A method for manufacturing an electrical storage device according to an eleventh aspect of the present invention is a method for manufacturing an electrical storage device including an electrode assembly and an outer packaging that seals the electrode assembly, the electrode assembly including: a first end part; a second end part disposed away from the first end part; and an intermediate part continuously extending between the first end part and the second end part, and the outer packaging including: an outer package film; and a lid having a joining surface to be joined to the outer package film. The manufacturing method includes the following:
disposing the lid and the electrode assembly so that the lid is located on at least one of the first end part side and the second end part side; and
winding the outer package film around the lid and the electrode assembly so as to wrap the joining surface of the lid and the intermediate part of the electrode assembly; and
joining the joining surface and the outer package film.

Further, the winding of the outer package film around the lid and the electrode assembly includes winding of the outer package film around the lid and the electrode assembly so that a pressure applied to the joining surface from the outer package film is larger than a pressure applied to the intermediate part from the outer package film. Advantageous Effects of Invention

According to the electrical storage device, the electrical storage device manufacturing kit, and the method for manufacturing an electrical storage device according to the present invention, a joining failure between the outer package film and the lid can be suppressed without adversely affecting the electrode assembly.

### Brief Description of Drawings

[Fig. 1] Fig. 1 is a perspective view of an electrical storage device according to an embodiment.
[Fig. 2] Fig. 2 is a perspective view of an electrode assembly included in the electrical storage device of Fig. 1.
[Fig. 3] Fig. 3 is a sectional view illustrating a layer configuration of an outer package film included in the electrical storage device of Fig. 1.
[Fig. 4] Fig. 4 is a perspective view of a lid included in the electrical storage device of Fig. 1.
[Fig. 5] Fig. 5 is a view describing a method of specifying an outer periphery of a joining surface of the electrical storage device of Fig. 1.
[Fig. 6] Fig. 6 is a view describing an example of a manufacturing process of an electrical storage device using an electrical storage device manufacturing kit according to an embodiment.
[Fig. 7] Fig. 7 is a flowchart illustrating an example of a method for manufacturing the electrical storage device of Fig. 1.
[Fig. 8] Fig. 8 is a view describing a magnitude relationship of an outer periphery between a joining surface and an intermediate part.
[Fig. 9] Fig. 9 is a top view of an electrical storage device intermediate produced by a method for manufacturing an electrical storage device.
[Fig. 10A] Fig. 10A is a view describing a configuration of a lid and an electrode assembly according to a modification.
[Fig. 10B] Fig. 10B is a view describing a configuration of a lid and an electrode assembly according to another modification.
[Fig. 11] Fig. 11 is a sectional view schematically illustrating a winding-type electrode assembly housed in an outer packaging of an electrical storage device of a modification.

### Description of Embodiments

Hereinafter, an electrical storage device, an electrical storage device manufacturing kit, and a method for manufacturing an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less. In this specification, the corner includes a corner formed with an R surface (chamfered surface) as well as a corner having a right angle shape.

### <1. Configuration of electrical storage device>

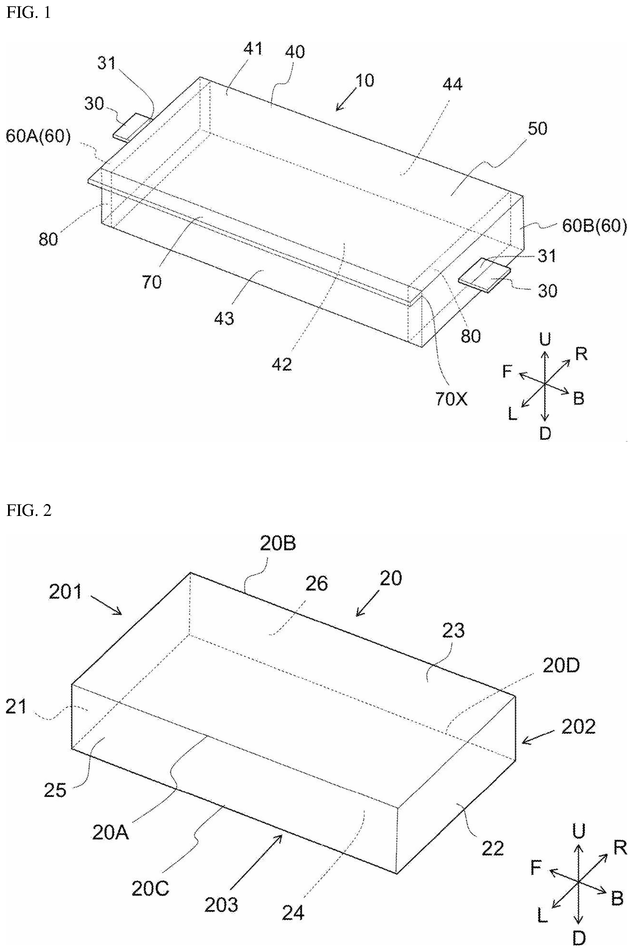

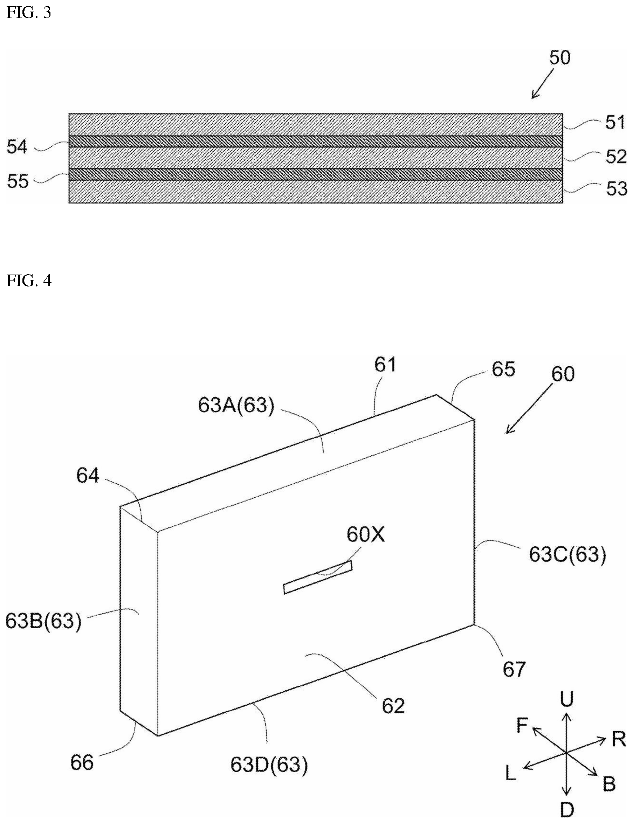

Fig. 1 is a perspective view schematically illustrating an electrical storage device 10 according to the present embodiment. Fig. 2 is a perspective view of an electrode assembly 20 included in the electrical storage device of Fig. 1A. Fig. 3 is a sectional view illustrating a layer configuration of an outer package film 50 included in the electrical storage device 10 of Fig. 1. Fig. 4 is a perspective view of a lid 60 included in the electrical storage device 10 in Fig. 1. In Fig. 1, the direction along arrow UD indicates a thickness direction of the electrical storage device 10, the direction along arrow LR indicates a width direction of the electrical storage device 10, and the direction along arrow FB indicates a depth direction of the electrical storage device 10. The direction indicated by each of arrows UD, LR, and FB is also shared across the subsequent drawings.

The electrical storage device 10 includes an electrode assembly 20, an electrode terminal 30, and an outer packaging 40. The electrode assembly 20 includes: for example, a lithium ion battery; a capacitor; an all-solid-state battery; a semi-solid-state battery; a pseudo-solid-state battery; a polymer battery; an all-polymer battery; a lead storage battery; a nickel-hydrogen storage battery; a nickel-cadmium storage battery; a nickel-iron storage battery; a nickel-zinc storage battery; a silver oxide-zinc storage battery; a metal-air battery; a polyvalent cation battery; or electrodes (positive electrode and negative electrode) constituting an electrical storage member such as a capacitor; a separator; and the like. In the present embodiment, the shape of the electrode assembly 20 is a substantially cuboid formed from a laminate in which a plurality of rectangular plate-shaped electrode foils, separators, and the like are layered in the UD direction. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

In the present embodiment, the electrical storage device 10 includes two electrode terminals 30. The electrode terminals 30 are metal terminals for use in input and output of electrical power in the electrode assembly 20. One end part of each electrode terminal 30 is electrically connected to an electrode (a positive electrode or a negative electrode) included in the electrode assembly 20. The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where the lid 60 described later is made from, for example, metal, the lid 60 may also function as the electrode terminal 30, and in this case, the lid 60 having a function as an electrode terminal may, or is not required to, protrude from the outer packaging 40.

As illustrated in Fig. 2, in the present embodiment, the electrode assembly 20 includes a front surface 21, a back surface 22, an upper surface 23, a lower surface 24, a first lateral surface 25, and a second lateral surface 26 in the present embodiment. The front surface 21 faces one of lids 60 (lid 60A). The back surface 22 faces the other lid 60 (lid 60B). The upper surface 23, the lower surface 24, the first lateral surface 25, and the second lateral surface 26 respectively constitute an upper surface 41, a lower surface 42, a first lateral surface 43, and a second lateral surface 44 of the outer packaging 40 described later. Note that the front surface 21, the back surface 22, the first lateral surface 25, and the second lateral surface 26 are imaginary surfaces when the laminate is regarded as a substantially cuboid with reference to the upper surface 23 and the lower surface 24 formed by the laminate. The front surface 21 and the back surface 22 respectively constitute a first end part 201 and a second end part 202, which are disposed apart from each other in the FB direction, of the electrode assembly 20. The upper surface 23, the lower surface 24, the first lateral surface 25, and the second lateral surface 26 constitute an intermediate part 203, which continuously extends between the first end part 201 and the second end part 202, of the electrode assembly 20. The first end part 201 may include an element protruding from the front surface 21 toward the lid 60A (in a direction along arrow F) in addition to the front surface 21. Similarly, the second end part 202 may include an element protruding from the back surface 22 toward the lid 60B (in a direction along arrow B) in addition to the back surface 22.

The electrode assembly 20 includes a corner 20A, a corner 20B, a corner 20C, and a corner 20D. The corner 20A is formed at a boundary between the upper surface 23 and the first lateral surface 25. The corner 20B is formed at a boundary between the upper surface 23 and the second lateral surface 26. The corner 20C is formed at a boundary between the first lateral surface 25 and the lower surface 24. The corner 20D is formed at a boundary between the second lateral surface 26 and the lower surface 24. Note that at least one of the corners 20A to 20D may be formed with an R surface. An example in which the R surfaces are formed at the corners 20A to 20D will be described later.

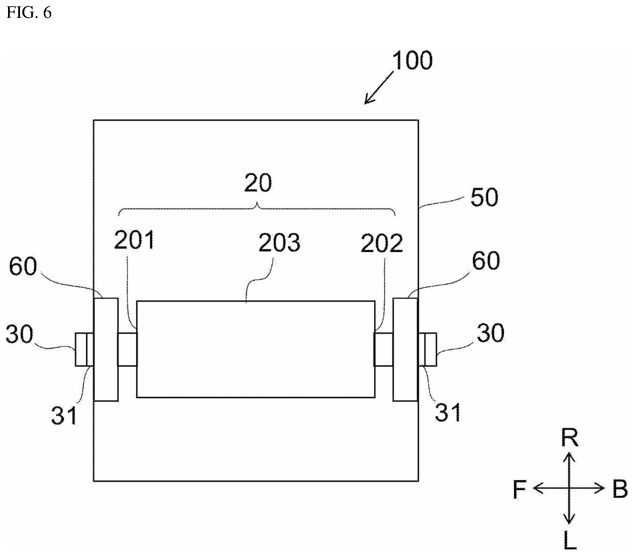

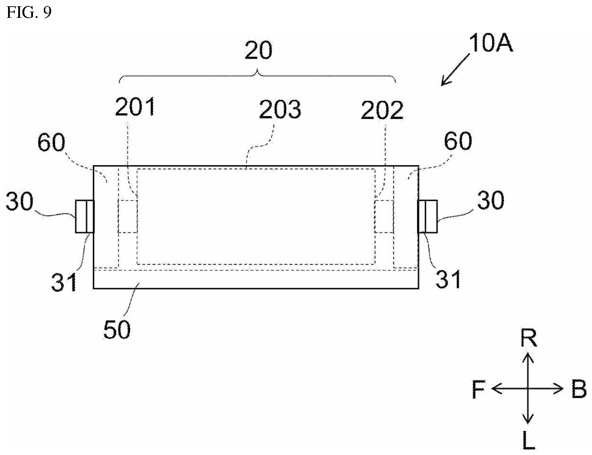

Here, the outer peripheries of the intermediate part 203 are denoted as L1 and L1'. The outer periphery L1 is an outer periphery of the intermediate part 203 of the electrode assembly 20 constituting an electrical storage device manufacturing kit 100 or an electrical storage device intermediate 10A. The electrical storage device manufacturing kit 100 (see Fig. 6) and the electrical storage device intermediate 10A (see Fig. 9) will be described later. The outer periphery L1' is an outer periphery of the intermediate part 203 of the electrode assembly 20 constituting the electrical storage device 10. More specifically, the outer peripheries L1 and L1' are lengths of an outer peripheral edge of the intermediate part 203 in a plane passing through an intermediate portion between the front surface 21 and the back surface 22 and orthogonal to the FB direction. The measurement of the outer peripheries L1 and L1' is performed at an environmental temperature of 20°C ± 2°C with a tension displayed on a part of a tape measure by using a tape measure conforming to JIS B 7522:2018 Type 1 Class 1 (note that, in the case of a tape measure with no tension displayed, the tension of 5 N is applied to the tape measure with a nominal size of 2 m or less, and the tension of 50 N is applied to the tape measure with a width of 50 mm or more). As described later, the outer periphery L1 is smaller than an outer periphery L2 of the joining surface 63 of the lid 60 before forming the electrical storage device 10 and in a state of being not joined to the outer package film 50. That is, in the electrical storage device manufacturing kit 100 described later, L1 < L2 is established. The outer periphery L1 is smaller than an outer periphery L3 of the joining surface 63 of the lid 60 before forming the electrical storage device 10 and in a state of being joined to the outer package film 50. That is, in the intermediate 10A of the electrical storage device 10 described later, L1 < L3 is established. For an electrical storage device in which the outer periphery L1' is smaller than the outer periphery L3 of the joining surface of the lid 60 constituting the electrical storage device, that is, L1' < L3 is established, L1 < L2 is established in the electrical storage device manufacturing kit for manufacturing the electrical storage device, or L1 < L3 is established in the electrical storage device intermediate.

As described above, an electrical storage device in which L1' < L3 is established is included in the scope of the present invention. In the case of the electrical storage device manufacturing kit 100 in which L1 < L2 is established, even when L1' ≥ L3 is satisfied in the electrical storage device 10 manufactured using the electrical storage device manufacturing kit 100, or even when L1 ≥ L3 is satisfied in the electrical storage device intermediate 10A manufactured using the electrical storage device manufacturing kit 100, the electrical storage device is included in the scope of the present invention. In the case of the electrical storage device intermediate 10A in which L1 < L3 is established, even when L1' ≥ L3 is satisfied in the electrical storage device 10 manufactured through the electrical storage device intermediate 10A, the electrical storage device is included in the scope of the present invention.

The metal material for forming the electrode terminal 30 is, for example, aluminum, nickel, copper, or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel, or the like. Note that the outermost layer of the electrode assembly 20 is not necessarily an electrode, and may be, for example, a protective tape or a separator.

The outer packaging 40 seals the electrode assembly 20. The outer packaging 40 according to the present embodiment includes the outer package film 50 and the pair of lids 60. The outer package film 50 according to the present embodiment wraps the electrode assembly 20 so as to surround the entire intermediate part 203 from the outside. In the present embodiment, the outer package film 50 is wound around the electrode assembly 20 such that the first end part 201 side and the second end part 202 side are opened. The pair of lids 60 is disposed on the first end part 201 side and the second end part 202 side of the electrode assembly 20 in order to close the opening. In the winding step in the method for manufacturing the electrical storage device 10 described later, the outer package film 50 to which tension is applied is wound around the pair of lids 60 disposed in this manner and the electrode assembly 20 (hereinafter, this state is also referred to as "wound state"). Note that the wound state can also be achieved by housing the electrode assembly 20 in a tube after the outer package film 50 is rolled into a tubular shape so as to form a pair of openings or is rolled into a tubular shape and then at least partially temporarily fixed so as to maintain such a state, then disposing the lid 60 in each of the pair of openings, and subsequently applying tension to the outer package film 50. Alternatively, the wound state can also be achieved by preparing the electrode assembly 20 with the pair of lids 60 being joined to the first end part 201 and the second end part 202 in advance, housing the electrode assembly 20 in the outer package film 50 rolled into a tubular shape or the outer package film 50 rolled into a tubular shape and then at least partially temporarily fixed so as to maintain such a state, and subsequently applying tension to the outer package film 50. As described above, when the wound state where the outer package film 50 is wound (with a certain tension) around the pair of lids 60 and the electrode assembly 20 can be achieved, the pair of openings can be closed by joining the pair of lids 60 and the outer package film 50, and the electrode assembly 20 can be sealed.

It is preferable that an adhesive film 31 is joined to the electrode terminal 30 from the viewpoint of suitable bonding to the lid 60. The adhesive film 31 can be arbitrarily selected as long as it is a film capable of bonding the electrode terminal 30 formed of metal and the lid 60 formed of resin. For the adhesive film 31, for example, a polyolefin-based resin such as a polyethylene-based resin or a polypropylene-based resin, a cyclic polyolefin-based resin, or an acid-modified polyolefin-based resin obtained by graft-modifying a polyolefin-based resin with an acid such as maleic anhydride can be used. The adhesive film 31 can be a film having a single layer or two or more layers of any of the above-mentioned resins. In the present embodiment, the adhesive film 31 is joined to substantially the whole of a portion of the electrode terminal 30 which is covered with the lid 60.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, which leads to increased likelihood of deterioration in battery performance. On the other hand, since outer packaging 40 seals the electrode assembly 20 by wrapping the electrode assembly 20 with the outer package film 50, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 wraps the electrode assembly 20 in a state of being in contact with or close to the outer surface of the intermediate part 203. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As illustrated in Fig. 3, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be formed from a material that is flexible and easy to bend, and the outer package film 50 may be formed from, for example, a resin film. Note that the outer package film 50 is preferably weldable by a method such as heat-sealing, ultrasonic sealing, and high-frequency sealing.

The outer package film 50 may include a laminate including at least the barrier layer 52 and the heat-sealable resin layer 53 in the stated order. In this laminate, the base material layer 51 is a layer provided as necessary, the side of the barrier layer 52 opposite to the heat-sealable resin layer 53 side is the outermost layer side, and the heat-sealable resin layer 53 is the innermost layer.

The entire thickness of the outer package film 50 can be arbitrarily selected. From the viewpoint of strength, the thickness of the outer package film 50 is preferably 50 µm or more. From the viewpoint of moldability or followability, the thickness of the outer package film 50 is preferably 1200 µm or less. The thickness of the outer package film 50 is preferably in the range of 50 µm or more and 1200 µm or less.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 5 to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 includes a layer formed from a metal material. Specific examples of the metal material constituting the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed from the metal material described above may contain a recycled metal material. Examples of the recycled metal material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only from a recycled material, or may be formed from a mixed material of a recycled material and a virgin material. Note that the recycled metal material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed from, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added to the aluminum alloy foil. Softening can be performed by annealing or the like. From the viewpoint of improving mechanical strength of the outer package film 50, the aluminum alloy foil is more preferably a hard aluminum alloy foil formed from, for example, a work-hardened aluminum alloy. Examples of the hard aluminum alloy foil include aluminum alloy foils having a composition specified in JIS H4160: 1994 A8021H-H18, JIS H4160: 1994 A8079H-H18, JIS H4000: 2014 A8021P-H14, or JIS H4000: 2014 A8079P-H14. From the viewpoint of improving the mechanical strength of the outer package film 50, the aluminum alloy foil is preferably an aluminum alloy foil containing magnesium. In the aluminum alloy foil containing magnesium (100 mass%), the content of magnesium is preferably 0.2 to 5.6 mass%, and more preferably 0.2 to 3.0 mass%. Examples of the aluminum alloy foil containing magnesium include aluminum alloy foils having a composition specified in JIS H4000:2017 A5005P-O, JIS H4000:2017 A5050P-O, and JIS H4000:2017 A5052P-O.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed from austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 5 to 1000 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 to 1000 µm, about 9.0 to 1000 µm, about 9.0 to 1000 µm, about 9.0 to 1000 µm, about 9.0 to 85 µm, about 9.0 to 50 µm, about 9.0 to 40 µm, about 9.0 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. In a case where the barrier layer 52 is formed from an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is formed from a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

In a case where the barrier layer 52 is an aluminum foil, it is preferable that a corrosion-resistant film is provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during welding such as heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by welding such as heat-sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The outer package film 50 preferably includes one or more layers having a buffer function (hereinafter, referred to as "buffer layers") outside the heat-sealable resin layer 53, more preferably outside the barrier layer 52. The buffer layer may be layered outside the base material layer 51, and the base material layer 51 may also function as a buffer layer. In a case where the outer package film 50 includes a plurality of buffer layers, the plurality of buffer layers may lie side-by-side, or may be layered with the base material layer 51, the barrier layer 52, or the like interposed between the buffer layers.

The material constituting the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material constituting a nonwoven fabric is preferably a material having excellent heat resistance. In a case where the buffer layer is formed from a nonwoven fabric, the lower limit value of the thickness of the buffer layer is preferably 100 µm, still more preferably 200 µm, still more preferably 1000 µm. In a case where the buffer layer is formed from a nonwoven fabric, the upper limit of the thickness of the buffer layer is preferably 5000 µm, still more preferably 3000 µm. The thickness of the buffer layer is preferably in the range of 100 µm to 5000 µm, 100 µm to 3000 µm, 200 µm to 5000 µm, 200 µm to 3000 µm, 1000 µm to 5000 µm, or 1000 µm to 3000 µm. The thickness of the buffer layer is most preferably in the range of 1000 µm to 3000 µm among these.

In a case where the buffer layer is made from rubber, the lower limit value of the thickness of the buffer layer is preferably 1 mm, still more preferably 0.5 mm. In a case where the buffer layer is formed from rubber, the upper limit of the thickness of the buffer layer is preferably 10 mm, still more preferably 5 mm, still more preferably 2 mm. In a case where the buffer layer is made from rubber, the thickness of the buffer layer is preferably in the range of 1 mm to 10 mm, 1 mm to 5 mm, 1 mm to 2 mm, 0.5 mm to 10 mm, 0.5 mm to 5 mm or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 illustrated in Fig. 4 has, for example, a cuboid shape, and is, for example, a resin molded article made from a resin material. Note that the lid 60 may be formed by, for example, cold-molding the outer package film 50, or may be a metal molded article. The material constituting the lid 60 may include at least two or more kinds of materials from among a metal oxide, a carbon material, and a rubber material. Note that in a case where the pair of lids 60 are distinguished from each other, the lid 60 disposed on the first end part 201 side of the electrode assembly 20 in the FB direction may be referred to as the lid 60A, and the lid 60 disposed on the second end part 202 side may be referred to as the lid 60B. In the present embodiment, the lid 60A and the lid 60B have similar configurations, and these will thus be simply referred to as lids 60 in a case where these are not particularly distinguished.

The lid 60 includes a first surface 61, a second surface 62, and a joining surface 63. The first surface 61 faces the electrode assembly 20. The second surface 62 is a surface on a side opposite to the first surface 61. The joining surface 63 is connected to the first surface 61 and the second surface 62 and is joined to the heat-sealable resin layer 53 of the outer package film 50. In the present embodiment, the joining of the joining surface 63 and the heat-sealable resin layer 53 is performed by heat-sealing. The joining surface 63 and the outer package film 50 may be joined by any method other than heat-sealing, for example, welding or the like. A specific welding method is, for example, any method in addition to laser welding or ultrasonic welding. Note that the lid 60 may be formed by integrally combining a member (hereinafter, also referred to as "joining surface part") constituting the joining surface 63 and at least one member (hereinafter, also referred to as "lid main body part") other than the joining surface 63. In this case, the lid main body part and the joining surface part may be formed from the same material or different materials. For example, the lid main body part can be formed from a substantially plate-shaped metal, and the joining surface part can be a resin frame-shaped member injection-molded to the lid main body part and surrounding the periphery of the lid main body part. Hereinafter, the joining surface 63 will be described.

The joining surface 63 includes a first seal surface 63A, a second seal surface 63B, a third seal surface 63C, and a fourth seal surface 63D. The first seal surface 63A forms the upper surface of the lid 60. The first seal surface 63A extends in a first direction (LR direction in the present embodiment) in the electrical storage device 10. The second seal surface 63B and the third seal surface 63C are connected to the first seal surface 63A and form the lateral surfaces of the lid 60. The second seal surface 63B and the third seal surface 63C extend in a second direction (UD direction in the present embodiment) crossing the first direction in the electrical storage device 10. In the present embodiment, the first direction and the second direction orthogonally cross each other. However, the first direction and the second direction are not required to orthogonally cross each other. The fourth seal surface 63D forms the lower surface of the lid 60. The fourth seal surface 63D extends in the first direction (LR direction in the present embodiment) in the electrical storage device 10.

In a case where the lid 60 has a plate shape, the lid 60 is preferably thick to some extent to suppress deformation of the outer packaging 40 even in a case where electrical storage devices 10 are stacked on one another. From another viewpoint, in a case where the lid 60 has a plate shape, the joining surface 63 of the lid 60 is preferably thick to some extent such that the joining surface 63 of the lid 60 and the outer package film 50 can be suitably heat-sealed when the second seal portion 80, which will be described later, is formed. The minimum value of the thickness of the lid 60 is, for example, for example, 1.0 mm, more preferably 3.0 mm, still more preferably 4.0 mm. The maximum value of the thickness of the lid 60 is, for example, 20 mm, more preferably 15 mm, still more preferably 10 mm. The maximum value of the thickness of the lid 60 may be 20 mm or more. The thickness of the material for forming the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in a case where the lid 60 is described as having a plate shape, an aspect in which the lid 60 is formed only from the film specified by Japanese Industrial Standard (JIS), [Packaging Terminology] Standard is not included. Note that the thickness of the lid 60 may vary depending on a portion of the lid 60. In a case where the thickness of the lid 60 varies depending on a portion, the thickness of the thickest portion of the lid 60 is defined as a thickness of the lid 60.

The lid 60 further includes corners 64, 65, 66, and 67. The corner 64 is a boundary between the first sealing surface 63A and the second sealing surface 63B. The corner 65 is a boundary between the first sealing surface 63A and the third sealing surface 63C. The corner 66 is a boundary between the fourth sealing surface 63D and the second sealing surface 63B. The corner 67 is a boundary between the fourth sealing surface 63D and the third sealing surface 63C. The shape of at least one of the corners 64 to 67 may be angular or may be rounded by performing round chamfering, in other words, by forming R surfaces. In the present embodiment, the corners 64 to 67 are angular. An example in which the R surface is formed at the corners 64 to 67 will be described.

Here, the outer periphery of the joining surface 63 is denoted as L2. As described above, the outer periphery L2 is the outer periphery of the joining surface 63 in a state of being not joined to the outer package film 50. The outer periphery L2 is specified by converting pixels corresponding to the contour of the lid 60A or the lid 60B specified by the procedure of (V) into actual dimensions on the basis of image data of the lid 60A or the lid 60B alone captured under the conditions of (I) to (IV) described in measurement of the outer periphery L3 described later. As described above, in the lid 60A and the lid 60B, the outer periphery L2 of the joining surface 63 is larger than the outer periphery L1 of the electrode assembly 20. Note that the difference between the outer periphery L2 and the outer periphery L1 is preferably 1 mm or more.

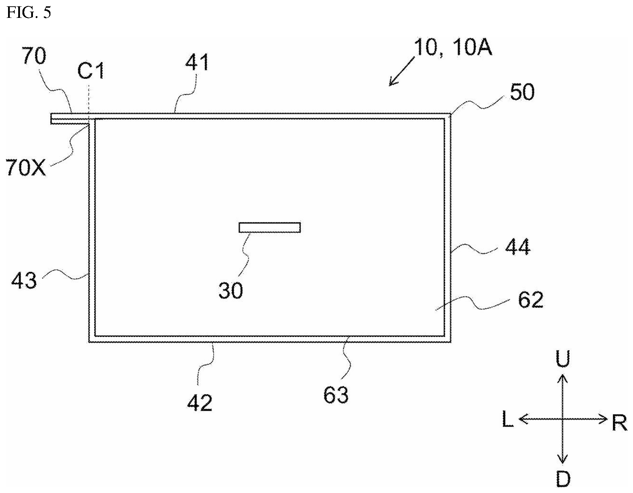

The outer periphery of the joining surface 63 in a state where the lid 60 constitutes the electrical storage device 10 or the electrical storage device intermediate 10A and the joining surface 63 is joined to the outer package film 50 is denoted as L3. In the electrical storage device 10, in a case where the outer periphery L3 of the joining surface 63 of the lid 60A and the lid 60B is larger than the outer periphery L1' of the electrode assembly 20, the difference between the outer periphery L3 and the outer periphery L1' is preferably 1 mm or more. In the electrical storage device intermediate 10A, the outer periphery L3 of the joining surface 63 of the lid 60A and the lid 60B is larger than the outer periphery L1 of the electrode assembly 20. Note that the difference between the outer periphery L3 and the outer periphery L1 is preferably 1 mm or more. The outer periphery L3 is specified by specifying the number of pixels corresponding to the outer peripheral edge of the second surface 62 of the lid 60A or the lid 60B in image data obtained by capturing the entire lid 60A or lid 60B, and converting the number of pixels into actual dimensions. It is assumed that the correspondence between the pixel of the image data and the actual length is specified in advance. Conditions when the image data is acquired are as follows.
(I) The electrical storage device 10 or the electrical storage device intermediate 10A is disposed on a horizontal plane such that the lower surface 42 of the electrical storage device 10 faces downward or the surface of the electrical storage device intermediate 10A corresponding to the lower surface 42 faces downward, and the second surface 62 of the lid 60A or the lid 60B faces the lens of a digital camera and is orthogonal to the optical axis of the lens. As the digital camera, a digital camera having an autofocus function, using CMOS as the imaging element, and having an optical zoom of 5 times or more, for example, WG-40 manufactured by RICHO is used.
(II) The background at the time of capturing is a solid color not similar to the color of the electrical storage device 10 or the electrical storage device intermediate 10A including the lid 60. Capturing is performed using an autofocus function of the digital camera.
(III) The number of pixels of the image data output from the image sensor of the digital camera is 4608×3456 (pixels) and the same applies to the number of recording pixels.
(IV) Among the number of recording pixels, the number of pixels corresponding to the lid 60A or the lid 60B is 30% or more.
   The specifying of the outer periphery L3 based on the image data is performed by the following method.
(V) From the image data, the contour of the end face of the electrical storage device 10 or the electrical storage device intermediate 10A in the plane orthogonal to the FB direction is extracted. Extraction of the contour is performed using image processing software ImageJ (National Institutes of Health). First, the image data is subjected to noise removal processing. Next, the contour of the end face of the electrical storage device 10 or the electrical storage device intermediate 10A is detected by edge detection.
(VI) Pixels corresponding to the outer package film 50 are excluded from the region surrounded by the extracted contour. Here, the outer package film 50 forms the first seal portion 70 in the electrical storage device 10. The first seal portion 70 is a portion formed by joining end edges of the outer package film 50. In the present embodiment, the root 70X of the first seal portion 70 is present at a boundary between the upper surface 41 and the first lateral surface 43 of the outer packaging 40. In the image data, the region corresponding to the first seal portion 70 is distinguished by an imaginary line C1 obtained by extending the contour line of the first lateral surface 43 of the outer packaging 40 in the UD direction (see Fig. 5). As a result, the pixels corresponding to the first seal portion 70 can be excluded from the region surrounded by the extracted contour. In the electrical storage device intermediate 10A, similarly to the electrical storage device 10, pixels corresponding to the portions of the outer package film 50 where the first seal portion 70 and the root 70X are to be formed are determined, and these pixels are excluded from the region surrounded by the extracted contour.
(VII) The pixels corresponding to the outer peripheral edge of the second surface 62 of the lid 60A or the lid 60B are specified by further excluding the number of pixels corresponding to the thickness of the outer package film 50 from the outer peripheral edge of the remaining region in this manner. The thickness of the outer package film 50 is specified by analyzing, with a laser microscope (for example, a combination of the controller VK-X3000 and the head unit VK-X3050 manufactured by KEYENCE Corporation), image data, which is obtained by capturing a section of the outer package film 50 included in the electrical storage device 10 or the electrical storage device intermediate 10A at an arbitrary position where processing such as joining to another member or sealing is not performed, by using an image analysis program (for example, multifile analysis application VK-X3050 manufactured by KEYENCE Corporation). The observation magnification of the head unit is set to 20 times of the objective lens and 480 times of the total magnification. In the image analysis program, the thickness from the outermost layer (in the present embodiment, the base material layer 51) to the innermost layer (in the present embodiment, the heat-sealable resin layer 53) of the outer package film 50, which can be specified from the image data, is measured.

In the present embodiment, the lid 60 is configured to contain a resin material. Here, "configured to contain a resin material" means that the content of the resin material is 50 mass% or more, preferably 80 mass% or more, more preferably 90 mass% or more, and still more preferably 95 mass% or more when the total of materials constituting the lid 60 is defined as 100 mass%. In other words, the materials constituting the lid 60 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, a copolymer of these resins, or a modified product of the copolymer. Among them, the resin material is preferably a heat-sealable resin such as polyester or polyolefin, and more preferably polyolefin. In a case where the resin material is a resin, the lid 60 may be molded by any molding method.

The resin material contained in the material constituting the lid 60 is preferably an olefin-based random copolymer, more preferably contains a resin containing a polyolefin backbone as a main component, still more preferably contains a polyolefin as a main component, and still more preferably contains polypropylene as a main component. The polyolefin may be an acid-modified polyolefin. The resin material contained in the material constituting the lid 60 preferably contains a plurality of kinds of amide-based slipping agents. In the resin material contained in the material constituting the lid 60, it is preferable that the plurality of amide-based slipping agents further contain an unsaturated fatty acid amide in addition to the saturated fatty acid amide. The resin material contained in the material constituting the cover 90 may be a polyolefin resin to which a propylene-based elastomer having a melting point higher than 150°C is added.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the lid 60 against a temperature change can be improved.

The melt mass flow rate of the resin material contained in the material constituting the lid 60 is preferably in the range of 1 g/10 min to 100 g/10 min, and more preferably in the range of 5 g/10 min to 80 g/10 min. The melt mass flow rate is measured on the basis of JIS K7210-1:2014. The measurement temperature for melt mass flow rate is 230°C.

In another example, the lid 60 may be configured to contain a metal material. Here, "configured to contain a metal material" means that the content of the metal material is 50 mass% or more, preferably 80 mass% or more, more preferably 90 mass% or more, and still more preferably 95 mass% or more when the total of materials constituting the lid 60 is defined as 100 mass%. In other words, the materials constituting the lid 60 can contain materials other than the metal material in addition to the metal material. The metal material constituting the lid 60 can be arbitrarily selected. The metal material constituting the lids 60 is, for example, aluminum, an aluminum alloy, nickel, copper, or a copper alloy. For example, in a case where the electrode assembly 20 is a lithium ion battery, the lid 60 connected to the positive electrode is preferably made of aluminum or an aluminum alloy. The lid 60 connected to the negative electrode is preferably made of nickel, copper, or a copper alloy. The material for forming the lid 60 connected to the negative electrode may be copper plated with nickel. The material constituting the lid 60 may include a recycled metal material.

In the present embodiment, a through-hole 60X into which the electrode terminal 30 is inserted is formed in the lid 60. The through-hole 60X penetrates through the first surface 61 and the second surface 62. The electrode terminals 30 project to the outside of the outer packaging 40 through the through-hole 60X formed in the lids 60 in a state where the electrode assembly 20 is wrapped by the outer package film 50. A small gap between the through-hole 60X of the lid 60 and the electrode terminal 30 is filled with, for example, a resin. Note that in the electrical storage device 10, a position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. In another example, the electrode terminals 30 may project to the outside of the outer packaging 40 from between the joining surface 63 of the lid 60 and the outer package film 50. In this case, the through-hole 60X may not be formed in the lid 60. Although the lid 60 and the electrode terminal 30 are provided separately in the electrical storage device 10, the lid 60 and the electrode terminal 30 may be integrally formed. Also when the electrode terminal 30 does not protrude from the end edge of the outer packaging 40, the through-hole 60X is not required to be formed in the lid 60.

In the present embodiment, mutually facing surfaces (heat-sealable resin layer 53) of the outer package film 50 are heat-sealed in a state where the outer package film 50 is wound around the intermediate part 203 of the electrode assembly 20 and the joining surfaces 63 of the pair of lids 60 to thereby form a first seal portion 70.

The first seal portion 70 extends in a longitudinal direction (FB direction) of the outer packaging 40. In the outer packaging 40, a position at which the first seal portion 70 is formed can be arbitrarily selected. In the present embodiment, a root 70X of the first seal portion 70 is located on a boundary between the upper surface 41 and the first lateral surface 43 of the outer packaging 40. The upper surface 41 has a larger area than the first lateral surface 43. The root 70X of the first seal portion 70 may be located on an arbitrary surface of the outer packaging 40. In the present embodiment, the first seal portion 70 protrudes further outward than the electrode assembly 20 in plan view. For example, the first seal portion 70 may be folded toward the upper surface 41 of the outer packaging 40 or may be folded toward the first lateral surface 43, but is preferably extended along the upper surface 41 or the first lateral surface 43 when the outer periphery L3 is specified.

In the present embodiment, the second seal portion 80 is formed by the heat-sealable resin layer 53 of the outer package film 50 and the joining surface 63 of the lid 60 being heat-sealed.

### <2. Electrical storage device manufacturing kit>

The electrode assembly 20, the outer package film 50, and the pair of lids 60 described above constitute the electrical storage device manufacturing kit 100 (see Fig. 6) for manufacturing the electrical storage device 10 according to the embodiment. In this electrical storage device manufacturing kit 100, the outer periphery L1 of the intermediate part 203 of the electrode assembly 20 is smaller than the outer periphery L2 of the joining surface 63 of the pair of lids 60. Thereby, in the winding step of the outer package film 50 in the method for manufacturing an electrical storage device described later, while preventing an unnecessary pressure from being applied to the electrode assembly 20, it is possible to wind the outer package film 50 around the joining surface 63 of the pair of lids 60 while preventing occurrence of sagging, wrinkles, and the like. Note that the electrical storage device manufacturing kit 100 may include, for example, at least one of the electrode terminal 30 and the adhesive film 31 in addition to the electrode assembly 20, the outer package film 50, and the pair of lids 60.

### <3. Method for manufacturing electrical storage device>

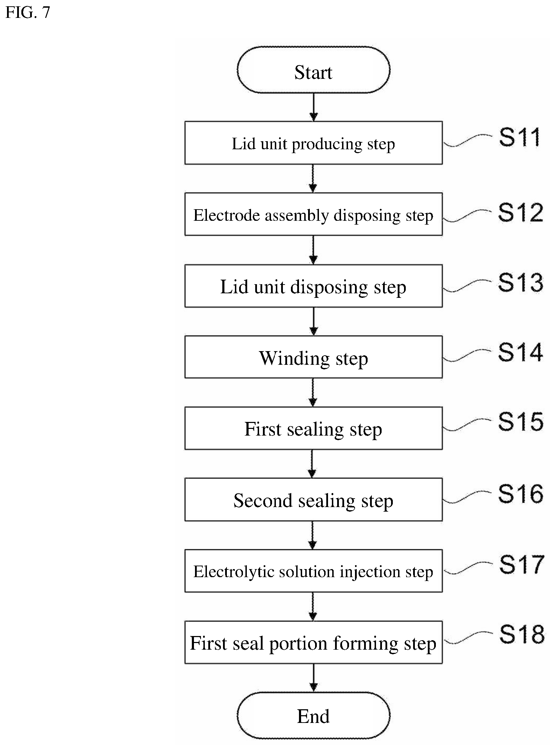

Fig. 7 is a flowchart illustrating an example of a method for manufacturing the electrical storage device 10 using the electrical storage device manufacturing kit 100. The method for manufacturing the electrical storage device 10 includes, for example, a first step, a second step, a third step, a fourth step, a fifth step, a sixth step, a seventh step, and an eighth step. The first to eighth steps are carried out by, for example, a manufacturing apparatus for the electrical storage device 10. Note that the first to eighth steps are merely convenient labels for the steps in the method for manufacturing the electrical storage device 10 and do not necessarily mean the order of the steps. The order of the following steps can be arbitrarily changed.

In the first step (lid unit producing step) in step S11, the manufacturing apparatus joins each of the pair of lids 60 to each of two electrode terminals 30. When the first step is completed, the pair of lid units in which the electrode terminals 30 are joined to the lids 60 is produced.

The second step (electrode assembly disposition step) in step S12 is carried out in parallel with the first step or after the first step. In the second step, the manufacturing apparatus disposes the electrode assembly 20 on the heat-sealable resin layer 53 of the outer package film 50. The outer package film 50 may be provided with a mark for aligning the electrode assembly 20 at an appropriate position with respect to the outer package film 50.

The third step (lid unit disposing step) in step S13 is carried out in parallel with the second step or after the second step. In the third step, the manufacturing apparatus disposes each of the pair of lid units produced in step S11 on the first end part 201 side and the second end part 202 side of the electrode assembly 20, and joins the electrode terminal 30 and the electrode assembly 20. Thereby, the outer package film 50, the electrode assembly 20, and the pair of lid units are in a state illustrated in Fig. 6. The outer package film 50 may be provided with a mark for appropriately aligning the pair of lid units with respect to the outer package film 50. Note that the method for manufacturing the electrical storage device 10 may include a step of joining the electrode assembly 20 and two electrode terminals 30 first, then disposing each of the pair of lids 60 on the first end part 201 side and the second end part 202, and joining the pair of lids 60 and the pair of electrode terminals, instead of the first step and the third step. In the method for manufacturing the electrical storage device 10, after the pair of lids 60 or the pair of lid units is disposed so as to be separated from each other, the electrode assembly 20 may be disposed between the pair of lids 60 or the pair of lid units, and the pair of lids 60 or the pair of lid units may be disposed on the first end part 201 side and the second end part 202 side of the electrode assembly 20. That is, the lid unit disposing step may be carried out before the electrode assembly disposing step.

The fourth step (winding step) in step S14 is carried out after the third step. In the fourth step, the manufacturing apparatus winds the outer package film 50 around the lid unit including the electrode assembly 20 and the pair of lids 60. In the fourth step, in the manufacturing apparatus, the electrode assembly 20 and the pair of lid units are wrapped with the outer package film 50 so as to surround the intermediate part 203 and a pair of joining surfaces 63 from the outside while bending the outer package film 50 at a predetermined position. In the fourth step, the manufacturing apparatus winds the outer package film 50 around the electrode assembly 20 and the pair of lid units with tension applied to the outer package film 50 while restricting the movement of the electrode assembly 20 and the pair of lid units by a restriction means. The restriction means is, for example, a groove into which the electrode assembly 20 and the pair of lids 60 are fitted. The restriction means may be an apparatus that applies an external force to the electrode assembly 20 and the pair of lids 60 so that the electrode assembly 20 and the pair of lids 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled. In the winding step, the procedure for achieving the wound state is not limited to the winding described above. For example, as described above, the electrode assembly 20 may be housed in the outer package film 50 rolled into a tubular shape or the outer package film 50 rolled into a tubular shape and then at least partially temporarily fixed so as to maintain such a state, then the lid 60 may be disposed in each of the pair of openings, and subsequently tension may be applied to the outer package film 50. Alternatively, the electrode assembly 20 with the pair of lids 60 being joined to the first end part 201 and the second end part 202 may be housed in the outer package film 50 rolled into a tubular shape or the outer package film 50 rolled into a tubular shape and then at least partially temporarily fixed so as to maintain such a state, and subsequently tension may be applied to the outer package film 50.

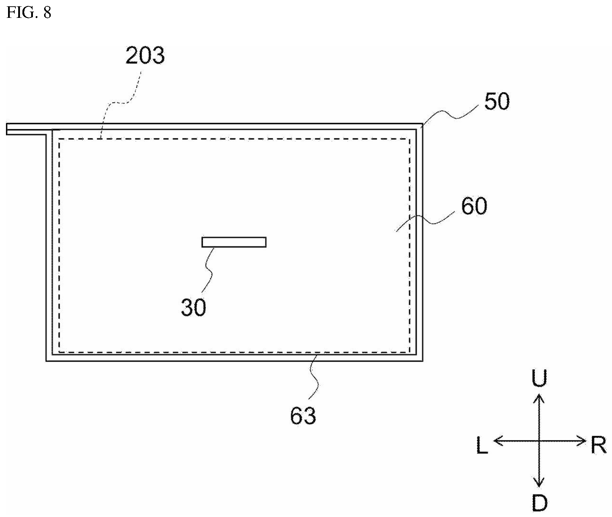

As described above, the outer periphery L1 of the intermediate part 203 is smaller than the outer periphery L2 of the joining surface 63. Therefore, in the fourth step, the pressure from the outer package film 50 on which the tension acts is mainly applied to the pair of lids 60, but is not applied to the electrode assembly 20 or is hardly applied thereto. Therefore, when the fourth step is completed, the joining surface 63, the intermediate part 203, and the outer package film 50 have the relationship as illustrated in Fig. 8, and the pressure applied to the intermediate part 203 from the outer package film 50 is smaller than the pressure applied to the joining surface 63 from the outer package film 50. Note that Fig. 8 is exaggerated for convenience of description, and does not necessarily reflect actual dimensions.

The fifth step (first sealing step) in step S15 is carried out after the fourth step. In the fifth step, the manufacturing apparatus forms a first seal portion in which an unsealed portion for injecting an electrolytic solution is partially formed (hereinafter, referred to as "temporary first seal portion"). In the temporary first seal portion, mutually facing heat-sealable resin layers 53 of the outer package film 50 are joined. Note that, in a case where the electrical storage device 10 is, for example, an all-solid-state battery, a step of injecting an electrolytic solution is not necessary, and thus, in the fifth step, the manufacturing apparatus forms the first seal portion 70.

The sixth step (second sealing step) in step S16 is carried out after the fifth step. In the sixth step, the manufacturing apparatus forms the second seal portion 80 by joining the heat-sealable resin layer 53 constituting the inner surface of the outer package film 50 to the joining surface 63 of the pair of lids 60 facing the heat-sealable resin layer 53. In the present embodiment, the joining of the heat-sealable resin layer 53 and the joining surface 63 is performed by heat-sealing. However, the joining may be performed by ultrasonic sealing, high-frequency sealing, or adhesion with an adhesive in addition to or instead of the heat-sealing. By the second sealing step, the electrical storage device intermediate 10A (see Fig. 9) in which the electrode assembly 20 is housed in the pair of lids 60 and the outer package film 50 that are joined to each other is produced. The electrical storage device intermediate 10A does not contain an electrolytic solution. In the electrical storage device intermediate 10A according to the present embodiment, the outer periphery L1 of the intermediate part 203 is smaller than the outer periphery L3 of the joining surface 63. With such a configuration, also in the electrical storage device intermediate 10A, an undesirable influence that an unnecessary pressure is applied to the electrode assembly 20 to cause, for example, collapse of the laminated structure of the electrode assembly 20 can be avoided.

The seventh step (electrolytic solution injection step) in step S17 is carried out after the sixth step. In the seventh step, the manufacturing apparatus injects the electrolytic solution from the unsealed portion formed in the temporary first seal portion.

The eighth step (first seal portion forming step) in step S18 is carried out after the seventh step. In the eighth step, the manufacturing apparatus forms the first seal portion 70 by heat-sealing a portion including the unsealed portion of the temporary first seal portion. In a case where the electrical storage device 10 is, for example, an all-solid-state battery, the seventh step and the eighth step are omitted.

### <4. Characteristics>

According to the electrical storage device manufacturing kit 100 and the method for manufacturing an electrical storage device, while the outer package film 50 can be wound around the pair of lids 60 without any gap, a situation in which an unnecessary pressure is applied to the electrode assembly 20 to cause, for example, collapse of the laminated structure of the electrode assembly 20 can be avoided. As a result, a possibility that a joining failure (in the present embodiment, sealing failure of the second seal portion 80) occurs in joining between the outer package film 50 and the joining surface 63 is reduced. Thereby, it is possible to omit work or the like of repairing the joining failure of the manufactured electrical storage device afterwards. In the electrical storage device 10, wrinkles and the like of the second seal portion 80 are prevented, and a sufficient sealing strength is secured.

According to the electrical storage device manufacturing kit 100 and the method for manufacturing an electrical storage device, even in a case where the size of the electrical storage device 10 is changed, the above effect can be obtained with no change without the tension in the winding step of the outer package film 50 being largely changed.

Note that, in the example in which the method for manufacturing the electrical storage device is performed, the verification that the pressure applied to the intermediate part 203 from the outer package film 50 is smaller than the pressure applied to the joining surface 63 from the outer package film 50 can be performed by the following method. In the first step, two electrode terminals 30 are respectively joined to the pair of lids 60 of the electrical storage device manufacturing kit 100 to form a pair of lid units. In the second step and the third step, the electrode assembly 20 and the pair of lid units are disposed on the outer package film 50, the lid unit is located on each of the first end part 201 side and the second end part 202 side. The electrode assembly 20 is further joined to two electrode terminals 30. Here, a pressure-sensitive sheet is disposed so as to cover the electrode assembly 20 and the entire joining surface 63 of the pair of lids from above. In the fourth step, the outer package film 50 and the pressure-sensitive sheet are wound around the electrode assembly 20 and the pair of lid units while the movement of the electrode assembly 20 and the pair of lid units is restricted. At this time, tension is applied to the outer package film 50 and the pressure-sensitive sheet so that the outer package film 50 and the pressure-sensitive sheet are not displaced. After the outer package film 50 and the pressure-sensitive sheet are wound around the entire circumference of the intermediate part 203 and the joining surface 63 in this manner, the outer package film 50 and the pressure-sensitive sheet are spread, and the pressure distribution recorded by the pressure-sensitive sheet is verified. Alternatively, the pressure distribution is verified by analysis software that visualizes the pressure of the pressure-sensitive sheet in a state where the outer package film 50 and the pressure-sensitive sheet are wound. In this case, when there is a region where gravity by the electrode assembly 20 is sensed by disposing the electrode assembly 20, the pressure distribution in the region is excluded.

### <5. Modifications>

The above-described embodiments are an example of possible forms of an electrical storage device and a method for manufacturing an electrical storage device according to the present invention, and are not intended to limit the forms thereof. The electrical storage device and the method for manufacturing an electrical storage device according to the present invention may have a form different from those exemplified in the embodiments. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

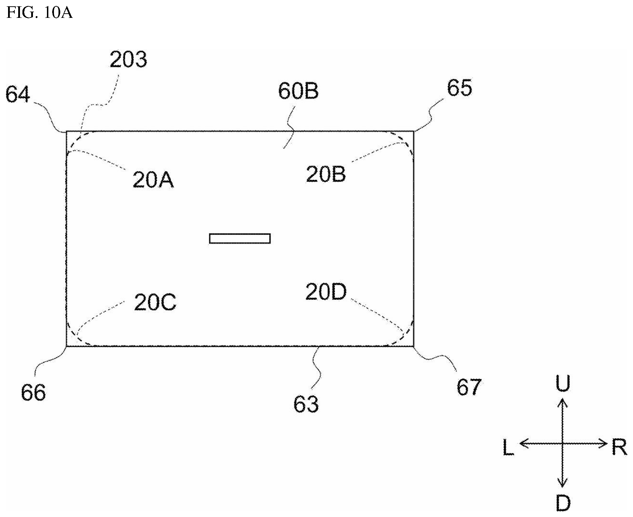

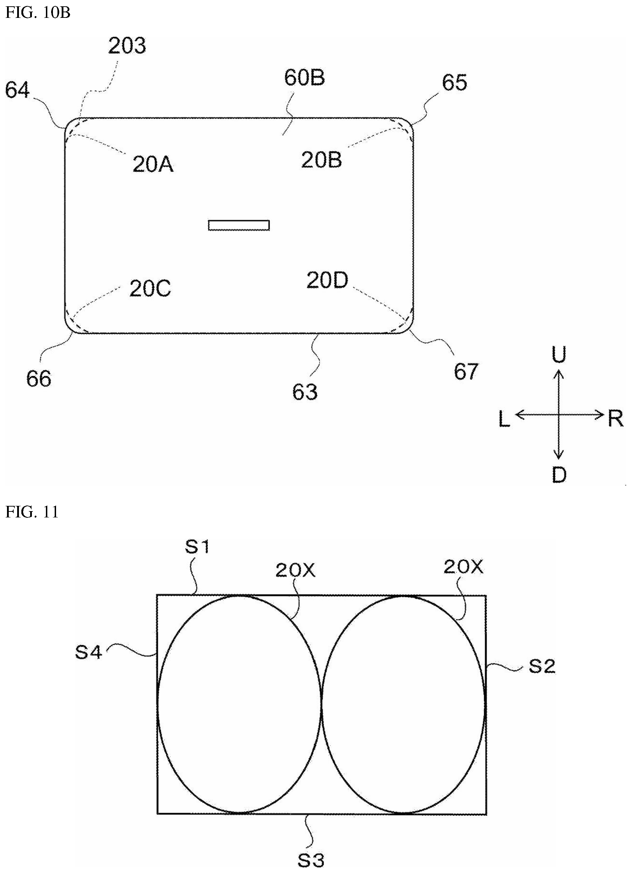

<5-1>
   In the above-described embodiment, the R surface is not formed at the corners 20A to 20D of the electrode assembly 20, but an R surface may be formed at at least one of the corners 20A to 20D. In this case, as illustrated in Fig. 10A, the outer periphery L1 or the outer periphery L1' may be adjusted so that the outer periphery L1 or the outer periphery L1' is smaller than the outer periphery L2 or the outer periphery L3. That is, the circumscribed quadrangle of the sectional shape in the section orthogonal to the FB direction of the intermediate part 203 coincides with the circumscribed quadrangle of the sectional shape in the section orthogonal to the FB direction of the joining surface 63, but the outer periphery L1 or the outer periphery L1' can be made smaller than the outer periphery L2 or the outer periphery L3 by forming an R surface at the corners 20A to 20D. An R surface may be formed at at least one of the corners 64 to 67 of the pair of lids 60. In this case, for example, as illustrated in Fig. 10B, by making the radius of curvature of the corners 20A to 20D larger than the radius of curvature of the corners 64 to 67, the outer periphery L1 or outer periphery L1' can be made smaller than the outer periphery L2 or the outer periphery L3. Note that, although Figs. 10A and 10B illustrate the lid 60B as an example, the same applies to the lid 60A.
<5-2>
   In the above-described embodiment, the outer package film 50 of the electrical storage device 10 may protrude further outward than at least one of the two lids 60 in the FB direction. The electrode assembly 20 is sealed by the part of the outer package film 50 protruding further outward than the lid 60 being closed. The part of the outer package film 50 protruding further than the lid 60 may be folded inward such that outer surfaces of the outer package film 50 are in contact with each other like a gable top container or may be folded toward an arbitrary surface of the outer packaging 40 like a brick-shaped container.
<5-3>
   In the above-described embodiment, the outer packaging 40 of the electrical storage device 10 and the electrical storage device manufacturing kit 100 may not include one of the pair of lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 sticking further outward than the electrode assembly 20 may be folded like a gable top container or a brick-shaped container.
<5-4>
   In the above-described embodiments, the outer contour shape of the outer packaging 40 can be arbitrarily changed. The outer contour shape of the outer packaging 40 may be a cylinder, a prism, or a cube. For example, the electrode assembly 20 may be formed in a substantially cylindrical shape so that the sectional shape of the intermediate part 203 of the electrode assembly 20 is circular, and the lid 60 may be formed in a disc shape. At this time, the outer diameter (outer periphery) L1 or the outer periphery L1' of the intermediate part 203 may be configured to be smaller than the outer diameter (outer periphery) L2 or L3 of the lid 60.
<5-5>
   In the above-described embodiment, the pair of lids 60 was formed in a plate shape. However, at least one of the pair of lids 60 may have a frame-shaped part extending in the FB direction from the outer peripheral edge of the first surface 61. At least one of the first end part 201 and the second end part 202 of the electrode assembly 20 may be at least partially housed in the region surrounded by the frame-shaped part.
<5-6>
   In the above-described embodiment, the entire surface between the first surface 61 and the second surface 62 of the lid 60 is the joining surface 63, but the entire surface connected to the first surface 61 and the second surface 62 may not be configured as the joining surface 63. In a case where the frame-shaped part is formed in the lid 60, at least a part of the frame-shaped part in the FB direction may be a joining surface.
<5-7>
   The joining surface part of the lid 60 may be an adhesive film integrally joined to the lid main body part. A method of joining the lid main body part and the joining surface part (adhesive film) is not particularly limited, and may be adhesion, welding seal, or the like. The adhesive film is not particularly limited, but for example, in a case where the joining surface part is formed from metal, the same film as the adhesive film 31 described above is preferable. Alternatively, the adhesive film is preferably a multilayer film including at least a heat-sealable resin layer, a heat-resistant base material layer, and a heat-sealable resin layer in the stated order. In this case, as specifications about the heat-sealable resin layer of the adhesive film, specifications about the heat-sealable resin layer 53 can be applied. As materials constituting two heat-sealable resin layers of the adhesive film, the same material or different materials may be used, and materials that match the material constituting the heat-sealable resin layer 53 of the outer package film 50 and the material constituting the lid main body part are appropriately selected. The material constituting the heat-sealable resin layer of the adhesive film, which is bonded to the lid main body part, is preferably an acid-modified polyolefin-based resin obtained by graft modification with an acid such as maleic anhydride. For the heat-sealable resin layer of the adhesive film, which is bonded to the outer package film 50, the same material as that for forming the heat-sealable resin layer 53 of the outer package film 50 is preferably used.

For the heat-resistant base material layer, any film may be used as long as it is formed from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Note that polyethylene terephthalate is particularly preferable because it is inexpensive and has high strength.

<5-8>
In the above-described embodiment, the electrode assembly 20 was of a so-called stack type, but the form of the electrode assembly 20 is not limited thereto. For example, the electrode assembly 20 may be of so-called winding type configured such that a positive electrode and a negative electrode are wound with a separator interposed therebetween. The electrode assembly 20 may be formed by layering a plurality of winding-type electrode assemblies.

Fig. 11 is a sectional view schematically illustrating a winding-type electrode assembly 20X housed in the outer packaging 40. In the example illustrated in Fig. 11, the number of winding-type electrode assemblies 20 housed in the outer packaging 40 is two. The number of winding-type electrode assemblies 20 housed in the outer packaging 40 may be one or three or more. Outer peripheries L1 and L1' of the winding-type electrode assembly 20X are a sum of tangents S1 to S4 of the electrode assembly 20X in sectional view.

<5-9>
   In the above-described embodiment, the outer package film 50 of the electrical storage device 10 may protrude further outward than at least one of the two lids 60 in the FB direction. The electrode assembly 20 is sealed by the part of the outer package film 50 protruding further outward than the lid 60 being closed. The part of the outer package film 50 protruding further outward than the lid 60 may be folded like a gable top pouch or a brick-shaped pouch. The length of the electrode terminal in the FB direction is preferably such a length that the electrode terminal is exposed from the part of the outer package film 50 protruding further outward than the lid 60.
<5-10>
   In the above-described embodiment, the outer packaging 40 is not required to include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 protruding further outward than the electrode assembly 20 may be folded like a gable top pouch or a brick-shaped pouch.
<5-11>
   In the above-described embodiments, the outer contour shape of the outer packaging 40 can be arbitrarily changed. The outer contour shape of the outer packaging 40 may be a cylinder, a prism, or a cube.

### Reference Signs List

10 Electrical storage device
20 Electrode assembly
20A, 20B, 20C, 20D Corner
40 Outer packaging
50 Outer package film
60 Lid
64 to 67 Corner
100 Electrical storage device manufacturing kit
L1 Outer periphery of intermediate part
L1' Outer periphery of intermediate part
L2 Outer periphery of joining surface
L3 Outer periphery of joining surface

## Claims

1. An electrical storage device comprising:
an electrode assembly; and
an outer packaging that seals the electrode assembly, wherein
the electrode assembly includes:
a first end part;
a second end part disposed away from the first end part; and
an intermediate part continuously extending between the first end part and the second end part,
the outer packaging includes:
an outer package film that wraps the intermediate part; and
a lid that is disposed on at least one of the first end part side and the second end part side and has a joining surface joined to the outer package film, and
an outer periphery of the intermediate part is smaller than an outer periphery of the joining surface.

2. The electrical storage device according to claim 1, wherein a difference between the outer periphery of the intermediate part and the outer periphery of the joining surface is 1 mm or more.

3. The electrical storage device according to claim 1 or 2, wherein the intermediate part includes one or more corners formed with an R surface,
the joining surface includes one or more corners formed with an R surface, and
a radius of curvature of the one or more corners of the intermediate part is larger than a radius of curvature of the one or more corners of the joining surface.

4. An electrical storage device manufacturing kit for manufacturing an electrical storage device including an electrode assembly and an outer packaging that seals the electrode assembly, wherein
the electrode assembly includes:
a first end part;
a second end part disposed away from the first end part; and
an intermediate part continuously extending between the first end part and the second end part,
the outer packaging includes:
an outer package film for wrapping the intermediate part; and
a lid that is to be disposed on at least one side of the first end part side and the second end part side and has a joining surface to be joined to the outer package film, and
an outer periphery of the intermediate part is smaller than an outer periphery of the joining surface.

5. The electrical storage device manufacturing kit according to claim 4, wherein a difference between the outer periphery of the intermediate part and the outer periphery of the joining surface is 1 mm or more.

6. The electrical storage device manufacturing kit according to claim 4 or 5, wherein the intermediate part includes one or more corners formed with an R surface,
the joining surface includes one or more corners formed with an R surface, and
a radius of curvature of the one or more corners of the intermediate part is larger than a radius of curvature of the one or more corners of the joining surface.

7. An electrical storage device intermediate for manufacturing an electrical storage device including an electrode assembly and an outer packaging that seals the electrode assembly,
the electrode assembly including:
a first end part;
a second end part disposed away from the first end part; and
an intermediate part continuously extending between the first end part and the second end part,
the outer packaging including:
an outer package film that wraps the intermediate part; and
a lid that is disposed on at least one of the first end part side and the second end part side and has a joining surface joined to the outer package film, the electrical storage device intermediate comprising:
the electrode assembly; and
the outer package film and the lid that are joined to each other so as to house the electrode assembly, wherein
an outer periphery of the intermediate part is smaller than an outer periphery of the joining surface, and
the electrical storage device intermediate does not contain an electrolytic solution.

8. A method for manufacturing an electrical storage device including an electrode assembly and an outer packaging that seals the electrode assembly,
the electrode assembly including:
a first end part;
a second end part disposed away from the first end part; and
an intermediate part continuously extending between the first end part and the second end part, and
the outer packaging including:
an outer package film; and
a lid having a joining surface to be joined to the outer package film, the manufacturing method comprising:
disposing the lid and the electrode assembly so that the lid is located on at least one of the first end part side and the second end part side;
winding the outer package film around the lid and the electrode assembly so as to wrap the joining surface of the lid and the intermediate part of the electrode assembly; and
joining the joining surface and the outer package film to form an electrical storage device intermediate in which the electrode assembly is housed in the lid and the outer package film and that does not contain an electrolytic solution, wherein
an outer periphery of the intermediate part is smaller than an outer periphery of the joining surface in the electrical storage device intermediate.

9. The method for manufacturing an electrical storage device according to claim 8, further comprising injecting the electrolytic solution into an inside of the lid and the outer package film joined to each other.

10. A method for manufacturing an electrical storage device including an electrode assembly and an outer packaging that seals the electrode assembly,
the electrode assembly including:
a first end part;
a second end part disposed away from the first end part; and
an intermediate part continuously extending between the first end part and the second end part,
the outer packaging including:
an outer package film; and
a lid having a joining surface to be joined to the outer package film, and
an outer periphery of the intermediate part being smaller than an outer periphery of the joining surface, the manufacturing method comprising:
disposing the lid and the electrode assembly so that the lid is located on at least one of the first end part side and the second end part side;
winding the outer package film around the lid and the electrode assembly so as to wrap the joining surface of the lid and the intermediate part of the electrode assembly; and
joining the joining surface and the outer package film.

11. A method for manufacturing an electrical storage device including an electrode assembly and an outer packaging that seals the electrode assembly,
the electrode assembly including:
a first end part;
a second end part disposed away from the first end part; and
an intermediate part continuously extending between the first end part and the second end part, and
the outer packaging including:
an outer package film; and
a lid having a joining surface to be joined to the outer package film, the manufacturing method comprising:
disposing the lid and the electrode assembly so that the lid is located on at least one of the first end part side and the second end part side;
winding the outer package film around the lid and the electrode assembly so as to wrap the joining surface of the lid and the intermediate part of the electrode assembly; and
joining the joining surface and the outer package film, wherein
the winding of the outer package film around the lid and the electrode assembly includes winding of the outer package film around the lid and the electrode assembly so that a pressure applied to the joining surface from the outer package film is larger than a pressure applied to the intermediate part from the outer package film.
